**Europäisches Patentamt**

**European Patent Office**

**Office européen des brevets**

(19)

(11) Veröffentlichungsnummer: **0 121 086**
**B1**

# EUROPÄISCHE PATENTSCHRIFT

(12)

(45) Veröffentlichungstag der Patentschrift:
04.10.89

(21) Anmeldenummer: **84102002.7**

(22) Anmeldetag: **25.02.84**

(51) Int. Cl.⁴: **B 61 D 39/00,** B 60 J 7/04,
B 62 D 39/00

(54) Eisenbahngüterwagen.

(30) Priorität: **02.04.83 DE 3312001**

(43) Veröffentlichungstag der Anmeldung:
**10.10.84 Patentblatt 84/41**

(45) Bekanntmachung des Hinweises auf die Patenterteilung:
**04.10.89 Patentblatt 89/40**

(84) Benannte Vertragsstaaten:
**AT BE CH DE FR GB IT LI NL SE**

(56) Entgegenhaltungen:
**DE-A-2 434 267**
**DE-A-2 832 353**
**FR-A-1 451 558**
**GB-A-2 104 021**

(73) Patentinhaber: **Waggon Union GmbH, D-5900
Siegen (DE)**

(72) Erfinder: **Kramer, Rolf, Dipl.- Ing., Lohweg 2,
D-5900 Siegen 21 (DE)**
Erfinder: **Ahlborn, Günter, Holunderweg 26, D-5900
Siegen 21 (DE)**
Erfinder: **Schneider, Felix, In der Hanfwiese 2,
D-5902 Netphen 2 (DE)**
Erfinder: **Neuser, Ernst, Im Hüttseifen 37, D-5902
Netphen 2 (DE)**
Erfinder: **Hübsch, Henry, Dipl.- Ing., Hans- Sachs-
Weg 5, D-5900 Siegen 21 (DE)**
Erfinder: **Kampmann, Gerhard, Burgstrasse 11,
D-5902 Netphen 2 (DE)**
Erfinder: **Wagener, Paul- Werner, An der Netphe
39, D-5902 Netphen 1 (DE)**

(74) Vertreter: **Eberhard, Friedrich, Dr., Am
Thyssenhaus 1, D-4300 Essen 1 (DE)**

EP 0 121 086 B1

## Beschreibung

Die Erfindung betrifft einen Eisenbahngüterwagen mit Stirnwänden und fest angeordnetem Mittelportal, einem im wesentlichen ebenen Ladeboden und den Laderaum abdeckenden, in Schließstellung in einer Ebene liegenden und über auf Laufschienen laufenden Laufrollen übereinander verschiebbaren Hauben, die in ihrem oberen Scheitel geteilt, mit Gelenken und einer elastischen Abdeckung versehen und zum Verschieben aus ihrer Schließstellung in eine Verschiebestellung mittels einer Betätigungseinrichtung anhebbar und ausschwenkbar sind.

Es sind Eisenbahngüterwagen bekannt, bei denen die Ladefläche durch portalartig ausgebildete und teleskopartig ineinander schiebbare Hauben abgedeckt ist. Diese Güterwagen, deren Ladefläche für einen bequemen Zugang von den Seiten und von oben abschnittsweise freigelegt werden können, dienen vorwiegend dem Transport von schwerem Ladegut (z. B. große Blechrollen), das auf der Ladefläche festgelegt wird. Für die Beförderung von Stückgut sind diese Wagen weniger geeignet, weil bei einem Ladegutversatz ein Öffnen der Hauben erschwert sein kann. Weiter besteht der Nachteil, daß im Hinblick auf das Verschieben der kleinsten Haube der gesamte Laderaum entsprechend den Abmessungen dieser Haube eingeschränkt ist.

Es sind weiter Eisenbahngüterwagen mit fest angeordneten Stirnwänden bekannt, deren Ladefläche mit über Laufrollen verschiebbaren Hauben abgedeckt ist, von welchen Hauben mindestens eine Wand- und Dachabschnitte aufweist, welche ausstellbar sind, um eine solche Haube über eine andere Haube in Längsrichtung des Fahrzeugkörpers verschieben zu können. Gemäß der DE-C-923 669 ist beispielsweise ein geschlossener Fahrzeugkörper der vorbeschriebenen Art bereits bekannt. Bei einem solchen Fahrzeugkörper besteht ein die Ladefläche abdeckender Aufbau aus mindestens zwei in der Schließlage in einer Flucht nebeneinander liegenden Hauben, welche mit Hilfe von Rollen abgestützt sind und zwecks Vereinfachung der Be- und Entladung des Fahrzeugkörpers derart ineinander geschoben werden können, daß je nach der Verschieberichtung dieser Hauben die linke oder die rechte Haube der Ladefläche völlig freigegeben werden kann. Die Hauben dieser vorbekannten Ausführung sind dabei in ihrem oberen Scheitel längsgeteilt, wobei die beiden Hälften jeder Haube mittels Gelenken miteinander verbunden sind. Bei dieser vorbekannten Ausführung sind für die Laufrollen jeder Haube separate, parallel angeordnete Laufschienen vorgesehen, auf denen die Hauben verschoben werden können.

Nachteilig bei dieser vorbekannten Ausführung ist einmal die mangelnde Verklammerung der Hauben mit dem Wagenkasten in Schließstellung der Hauben, so daß die beim Verfahren des Eisenbahngüterwagens aus dem Ladegut auftretenden Längskräfte voll als Biegekräfte von den Stirnwänden aufgenommen werden müssen. Zum anderen ist bei der Ausführung der Verschiebeeinrichtung der Rauben nachteilig, daß mehrere Laufschienen parallel zueinander angeordnet sind und daß mindestens eine Haube zum Öffnen unter eine andere Haube geschoben werden muß, so daß beim Anliegen von Ladegut an eine Haube Schwierigkeiten beim Öffnen dieser Haube auftreten können.

Durch die DE-A-2 910 799 ist weiter ein Schienenfahrzeug mit ausstellbaren und verschiebbaren Hauben bekannt, bei welchem die Hauben in ihrem oberen Scheitel mit einem Streifen aus nachgiebigem Material ausgebildet sein können, um welchen die beiden durch die Anordnung des Streifens gebildeten Haubenhälften in einem vorbestimmten Bereich gegeneinander verschwenkt werden können. Zur Verschiebung dieser Hauben sind jeweils im näheren Bereich einer Längsseite des Ladebodens in einer unter der Ladefläche desselben liegenden Ebene mindestens zwei Tragschienen für zwei oder mehr Hauben vorgesehen. Zur Verschiebung der Hauben werden diese mittels einer Betätigungseinrichtung aus ihrer Schließlage angehoben und ausgeschwenkt und über die sich in Schließstellung befindliche Haube verschoben. Zur Freilegung der zweiten Hälfte des Laderaumes müssen jetzt beide Hauben gemeinsam über die erste vorher bereits geöffnete Hälfte des Laderaumes verschoben werden.

Nachteilig bei dieser vorbekannten Ausführung ist ebenfalls wieder die mangelnde Verklammerung der Hauben mit dem Fahrzeugkörper in Schließstellung, sowie die komplizierte Ausführung der Betätigungseinrichtung der einzelnen Hauben, die mehrere Laufschienen auf jeder Wagenlängsseite benötigt und teilweise ein Verschieben mehrerer Hauben übereinander erforderlich macht.

Ein weiterer Nachteil dieser Ausführung besteht darin, daß durch die Verspannung der Haube bei deren Ausschwenken aufgrund fehlender Gelenke kein berührungsfreies Verschieben der Hauben gewährleistet ist.

Durch die EP-A-0 011 195 ist weiter ein Eisenbahngüterwagen bekannt, der ein Dach und Seitenteile aufweist, die jeweils mindestens zwei bewegliche Wandteile enthalten. Diese Wandteile sind in Schließstellung in einer gemeinsamen Ebene angeordnet und mittels einer Betätigungseinrichtung, z. B. drehbar gelagerter Führungen, in eine vor der gemeinsamen Schließebene liegende Verschiebeebene schwenkbar und in dieser Ebene in Fahrzeuglängsrichtung verschiebbar gehalten. Die Wandteile sind mit Dachabschnitten verbunden, die sich jeweils in Länge eines Wandteils erstrecken und insgesamt das Fahrzeugdach bilden. Die Dachabschnitte weisen bei in Verschiebeebene befindlichen Wandteilen eine das Längsverschieben zulassende Lage auf.

Nachteilig bei dieser vorbeschriebenen Ausführung ist das Vielgelenksystem jeder Raube was prinzipielle Nachteile bezüglich der Weichheit der einzelnen Rauben in Schließstellung und bei deren Verschieben beinhaltet. Aus diesem Grund wird bei vorliegender Erfindung nicht weiter auf diese Ausführung eingegangen.

Die Aufgabe vorliegender Erfindung bestand nun darin, bei einem Eisenbahngüterwagen der eingangs genannten Art den Laderaum mittels Hauben so abzudecken und die Hauben und deren Betätigungseinrichtung so auszubilden daß die Hauben in Schließstellung mindestens teilweise die auf die Stirnwände einwirkenden Längskräfte auf das Untergestell des Eisenbahngüterwagens überleiten, daß die Betätigungseinrichtung der Hauben ein wahlweises Verschieben der einzelnen Hauben jeweils übereinander gewährleistet, daß die Betätigungseinrichtung einfach und wirtschaftlich ausgebildet ist, daß eine zuverlässige Funktion gewährleistet ist und daß im übrigen die Nachteile der eingangs genannten, vorbekannten Ausführungen vermieden werden.

Gemäß der Erfindung wird diese Aufgabe dadurch gelöst, daß das fest mit dem Untergestell verbundene Mittelportal unverstrebt angeordnet ist, daß jede den Laderaum zwischen einer Stirnwand und dem Mittelportal abdeckende Haube in Schließstellung an ihrem stirnwandseitigen Längsende in Längsrichtung form- und kraftschlüssig mit der Stirnwand verklammert ist, auf ihren Längsseiten unten nahe dem stirnwandseitigen Längsende mit Anschlagstücken in Richtung Stirnwand mit Spiel vor Anschlagnocken am Rahmen des Untergestells des Eisenbahngüterwagens steht, nahe ihres mittelportalseitigen Längsendes auf ihren Längsseiten unten mit Krampen in Richtung Stirnwand mit Spiel vor und unter Abhebesicherungsnocken des Untergestells steht, daß die Haube über unten an ihren Längsseiten fest angeordneten Stützfüßen in Stützschienen des Untergestells steht, und daß die Haube mittels der Betätigungseinrichtung aus der Schließstellung mit ihren Laufrollen auf die Laufschienen in die Verschiebestellung anhebbar, ausschwenkbar und absetzbar ist.

Durch die erfindungsgemäße Anordnung und Ausbildung der den Laderaum abdeckenden Hauben können diese wahlweise angehoben und über das Portal und die sich in Schließstellung befindliche Haube verschoben werden. Der Raum innerhalb des Lichtraumprofils kann optimal für den Laderaum genutzt werden. In Schließstellung der Hauben findet eine selbsttätige Verklammerung der Rauben mit den Stirnwänden und dem Untergestell in Wagenlängsrichtung statt. Dadurch wird der bei Pufferstoß auf die Stirnwände einwirkende Ladungsdruck zum größten Teil über die Hauben in das Untergestell des Eisenbahngüterwagen übergeleitet. Die Stirnwand kann dadurch leichter gebaut und deren Anbindung an das Untergestell einfacher gestaltet werden. In Schließstellung steht die Haube mittels ihrer Stützfüße in Stützschienen des Untergestells, wodurch die Laufrollen entlastet werden.

Erfindungsgemäß weist die Haube weiter im Bereich der Verklammerung mit der Stirnwand einen durchgehenden Längsträger auf, an dem rippenförmig bis zu Abschlußprofilen der Längsseiten jeder Hälfte der Haube verlaufende Spriegel fest angeordnet sind. Durch die Anordnung des Längsträgers in der Haube im Bereich deren Verklammerung mit der Stirnwand wird eine direkte Krafteinleitung aus der Stirnwand in ein tragendes Bauteil der Haube ermöglicht. Die rippenförmig verlaufenden Spriegel zwischen den Abschlußprofilen der Längsseiten jeder Hälfte der Haube und dem Längsträger gewährleisten eine direkte Überleitung der Kräfte aus dem Längsträger über die Spriegel in die Anschlagstücke und Anschlagnocken des Untergestells.

Jeder Stützfuß und jede Stützschiene sind mit korrespondierenden, in Wagenlängsrichtung verlaufenden Schrägflächen versehen, wobei die Schrägflächen der Stützschiene in Schließstellung der Hauben von außen mit Spiel vor den Schrägflächen der Stützfüße positioniert sind. Die Schrägflächen der Stützschiene und der Stützfüße gewährleisten ein zentrisches Einfahren der Haube in Schließstellung und bewirken ein Abstützen der unteren Längsseiten der Haube bei von innen gegen die Raube anliegendem Ladegut ohne das Ausschwenken der Haube aus ihrer Schließstellung in die Verschiebestellung zu behindern.

Jede Haube liegt in Verschiebestellung vor ihrer Schließstellung und in Schließstellung gegen elastische Anschläge der Stirnwand an. Diese elastischen Anschläge positionieren zum einen die Haube in ihrer Verschiebestellung vor ihrer Schließstellung und gewährleisten das Spiel zwischen Anschlagstücken und Anschlagnocken sowie zwischen Krampen und Abhebesicherungsnocken nach einem Auflaufstoß.

Jede Haube auf ihrer Außenseite im Bereich des Längsträgers und das Portal auf seiner Außenseite weisen um eine vertikale Achse drehbare Führungsrollen zum seitlichen Führen der verschobenen Haube auf. Beim Verschieben der Haube kann durch deren Dreigelenkausbildung ein Berühren der zu verschiebenden Haube mit dem Portal oder der sich in Schließstellung befindlichen Haube erfolgen. Das Berühren der zu verschiebenden Haube mit dem Mittelportal oder der sich in Schließstellung befindlichen Haube wird durch die genannten Führungsrollen vermieden.

Auf jeder Längsseite des Untergestells ist eine einzige gerade und ununterbrochene über die gesamte Wagenlänge durchlaufende Laufschiene angeordnet, wobei auf jeder Längsseite jeder Haube wie bekannt unten mindestens zwei Laufrollen an Laufrollenfüßen fest angeordnet sind, wobei an jedem Laufrollenfuß eine kurze, den Laufrollenfuß seitlich überragende Hilfsschiene in Wagenlängsrichtung fest angeordnet ist. Bautechnisch vorteilhaft und wirtschaftlich ist die Anordnung einer einzigen zum Verschieben beider Hauben dienende Laufschiene auf jeder Wagenlängsseite. Vorteilhaft sind weiter die Laufrollen der Hauben fest an den Hauben angeordnet und weisen keine beweglichen Gelenkteile und damit störanfällige Bauteile auf.

Erfindungsgemäß beinhaltet die Betätigungseinrichtung für jede Haube auf jeder Wagenlängsseite je eine Betätigungswelle, die in Wagenlängsrichtung im Untergestell drehbar gelagert ist, wobei die Betätigungswelle für jeden Laufrollenfuß einen fest angeordneten Stützarm trägt, an dessen freiem Ende eine in Wagenlängsrichtung drehbare Stützrolle angeordnet ist, die sowohl in Schließstellung der Haube als auch in Verschiebestellung der Haube vor deren Schließstellung von unten gegen die Hilfsschiene anliegt, wobei die Haube mittels der Betätigungswelle über den Stützarm, die Stützrolle und die Hilfsschiene aus der Schließstellung in die Verschiebestellung verschwenkbar ist. Sämtliche beweglichen Bauteile der Betätigungseinrichtung sind vorteilhaft geschützt in dem Untergestell des Eisenbahnwagens angeordnet.

Gemäß einer Ausführung der Erfindung ist an der Betätigungswelle nahe jedem Stützarm fest mindestens eine Sicherungsgabel angeordnet, die in Schließstellung der Haube und während deren Verschwenkens die Hilfschiene umgreift. Die Sicherungsgabel sichert die Haube in Schließstellung und beim Verschwenken aus ihrer Schließstellung in die Verschiebestellung vor unbeabsichtigtem Abheben der Hilfsschiene von der Stützrolle.

Vorteilhaft sind die Betätigungswellen jeder Haube durch ein ein gegenläufiges Verdrehen der Betätigungswellen bewirkendes Gestänge verbunden. Weiter ist gemäß der Erfindung in die Betätigungseinrichtung jeder Haube eine Entlastungsfeder zwischengeschaltet, die durch das Eigengewicht der Haube beim Verschwenken in deren Schließstellung spannbar ist. Durch die Entlastungsfeder wird das Anheben und Ausschwenken der Haube wesentlich erleichtert. Komplizierte, wegaufwendige Übersetzungsgetriebe innerhalb der Betätigungseinrichtung werden vermieden.

Insgesamt wird durch die Erfindung eine Möglichkeit geschaffen, den Laderaum eines Eisenbahngüterwagens jeweils zur Hälfte vollständig zu öffnen, wobei die Konstruktion der Haube als in deren Schließstellung integriertes Bauteil des Wagenkastens dessen konstruktive Ausbildung günstig beeinflußt und somit wirtschaftlich gestaltet. Die Betätigungseinrichtung der Haube setzt sich aus wenigen, geschützt angeordneten und einfachen Bauteilen zusammen, die ein sicheres Verschwenken und Verschieben der Haube gewährleisten.

Ein Ausführungsbeispiel der Erfindung wird anhand der Zeichnung erläutert.

Es zeigen

Fig. 1 eine perspektivische Ansicht des Eisenbahngüterwagens gemäß der Erfindung,

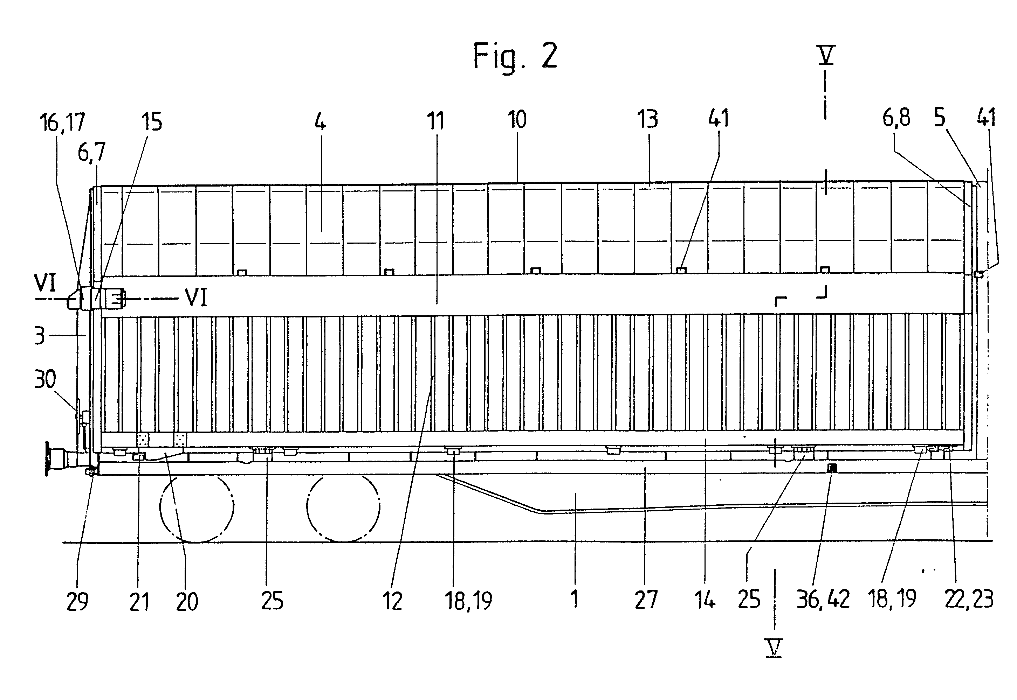

Fig. 2 die Seitenansicht einer Hälfte des Eisenbahngüterwagens nach Fig. 1 in vereinfachter Darstellung,

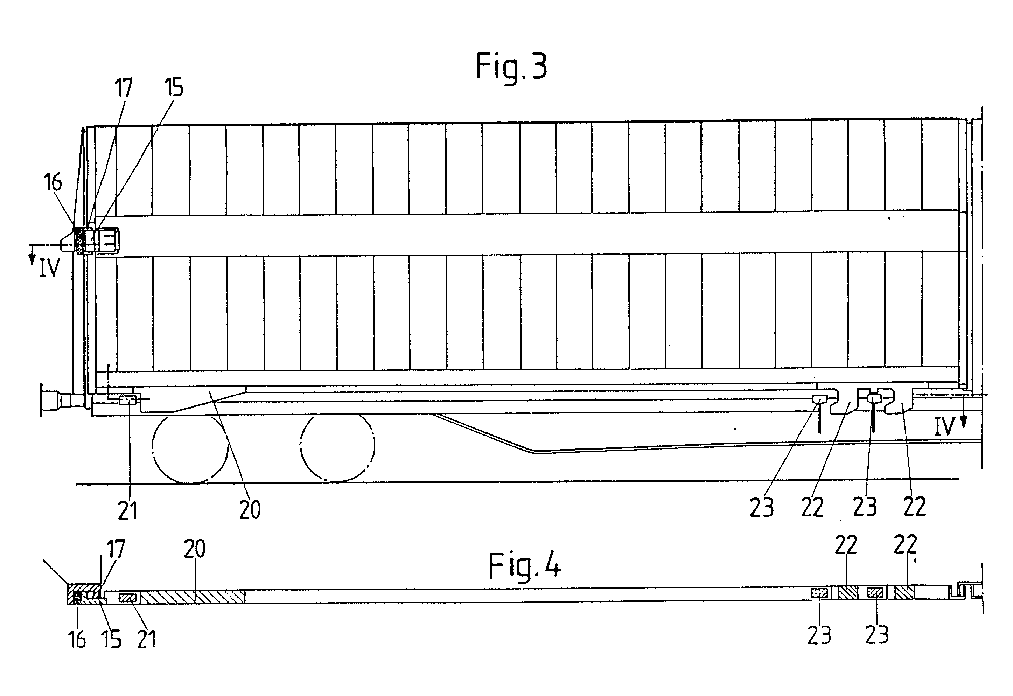

Fig. 3 die Ansicht nach Fig. 2 in schematischer Darstellung,
Fig. 4 den Schnitt nach Linie IV - IV der Fig. 3 in schematischer Darstellung,

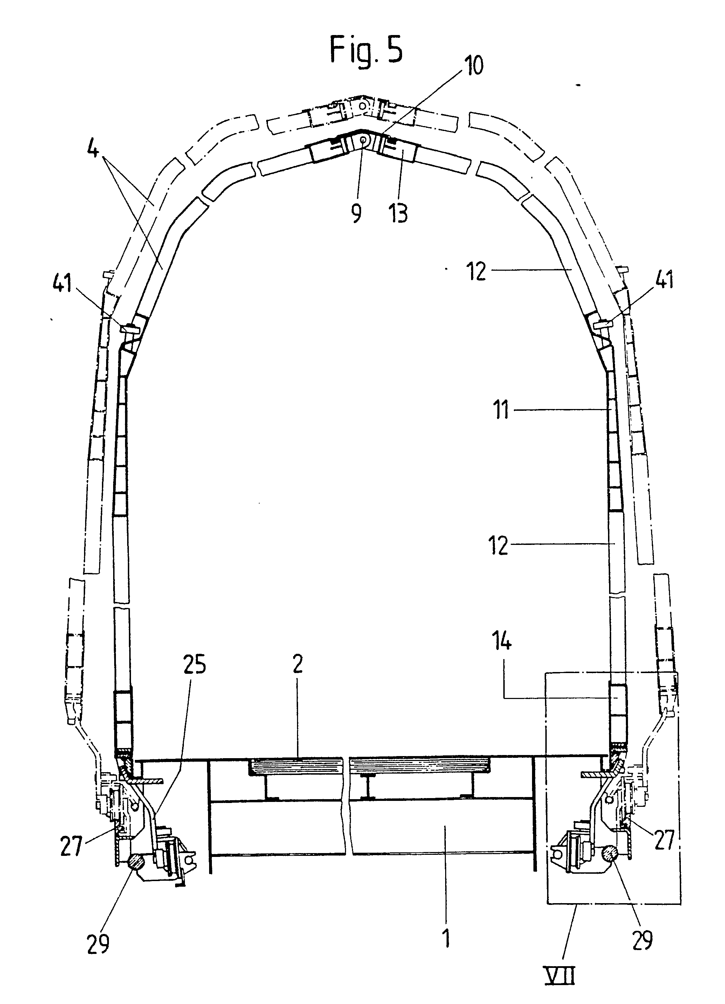

Fig. 5 einen Schnitt nach Linie V - V der Fig. 2 mit einer in Schließstellung befindlichen und einer darüber verschobenen, geöffneten Haube in schematischer Darstellung,

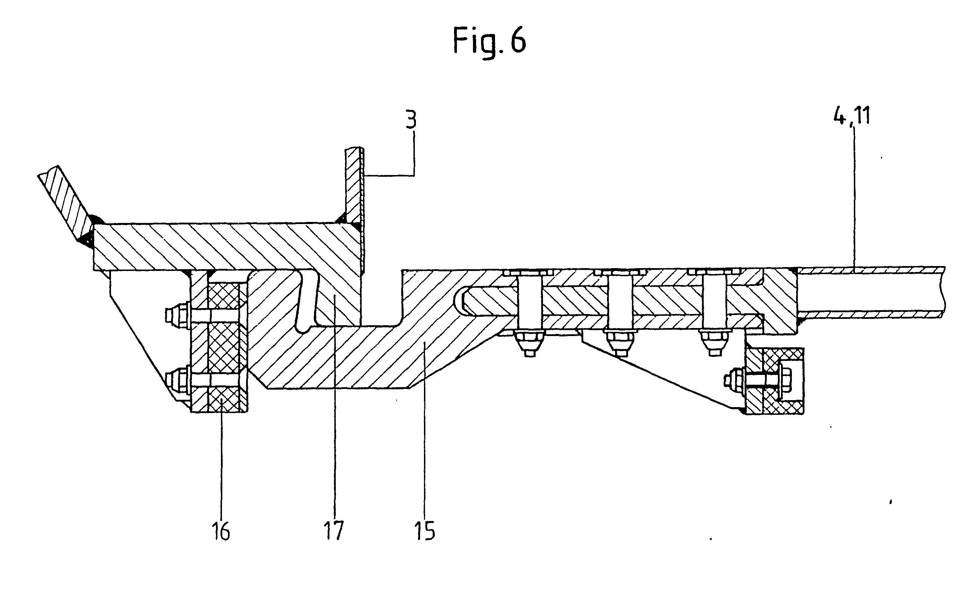

Fig. 6 einen Teilschnitt nach Linie VI - VI der Fig. 2,

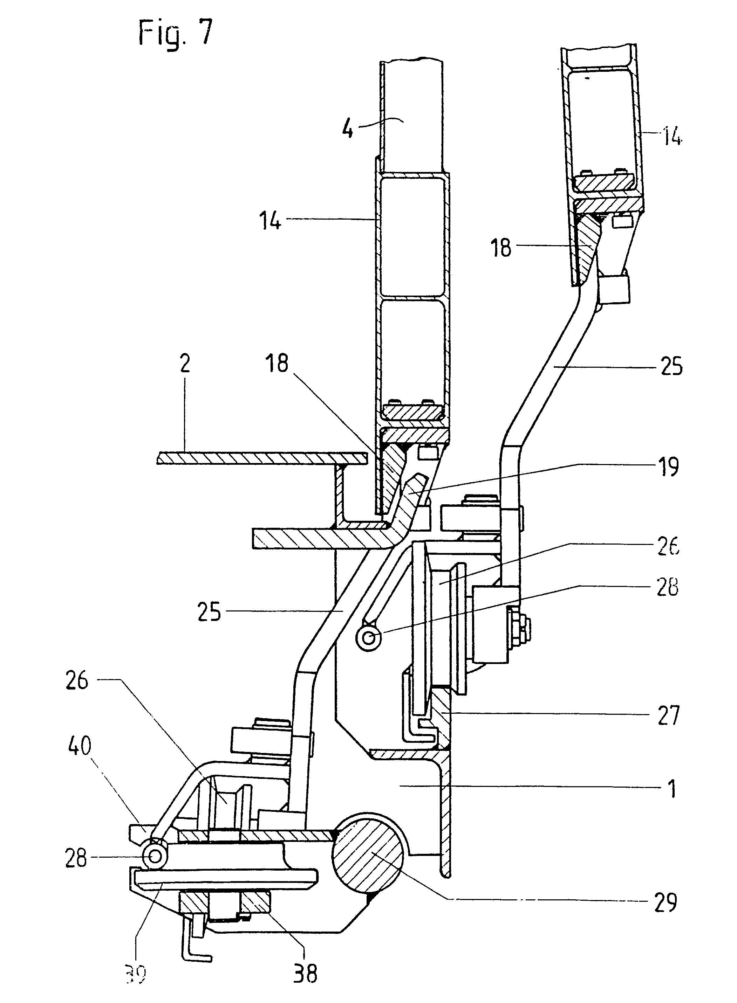

Fig. 7 die Einzelheit VII der Fig. 5 in vergrößerter Darstellung,

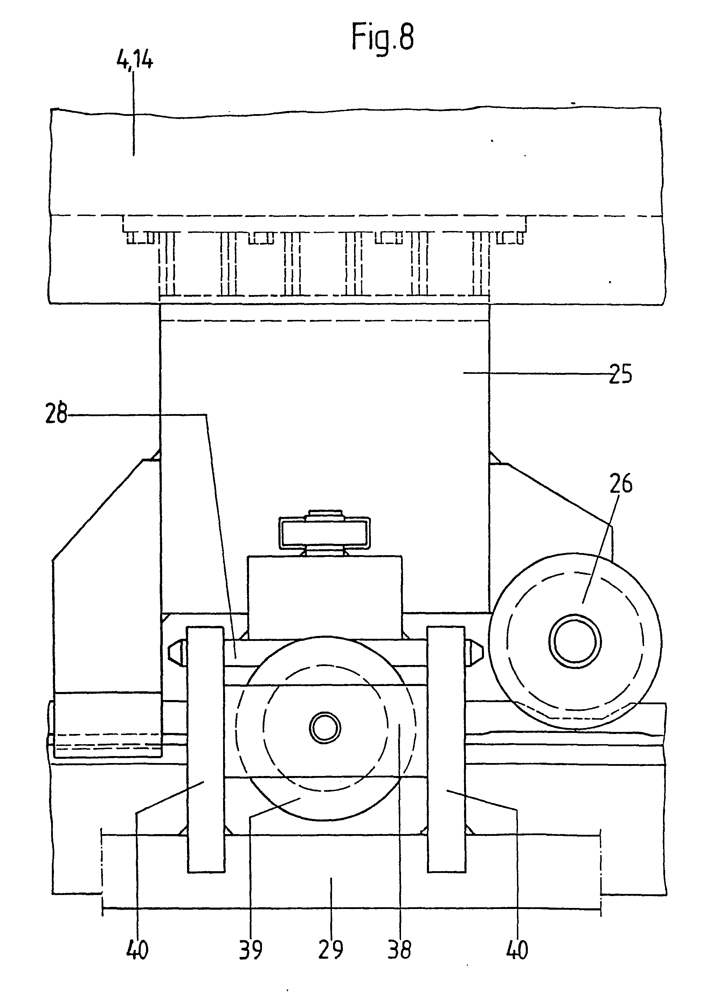

Fig. 8 eine Vorderansicht der Einzelheit nach Fig. 7,

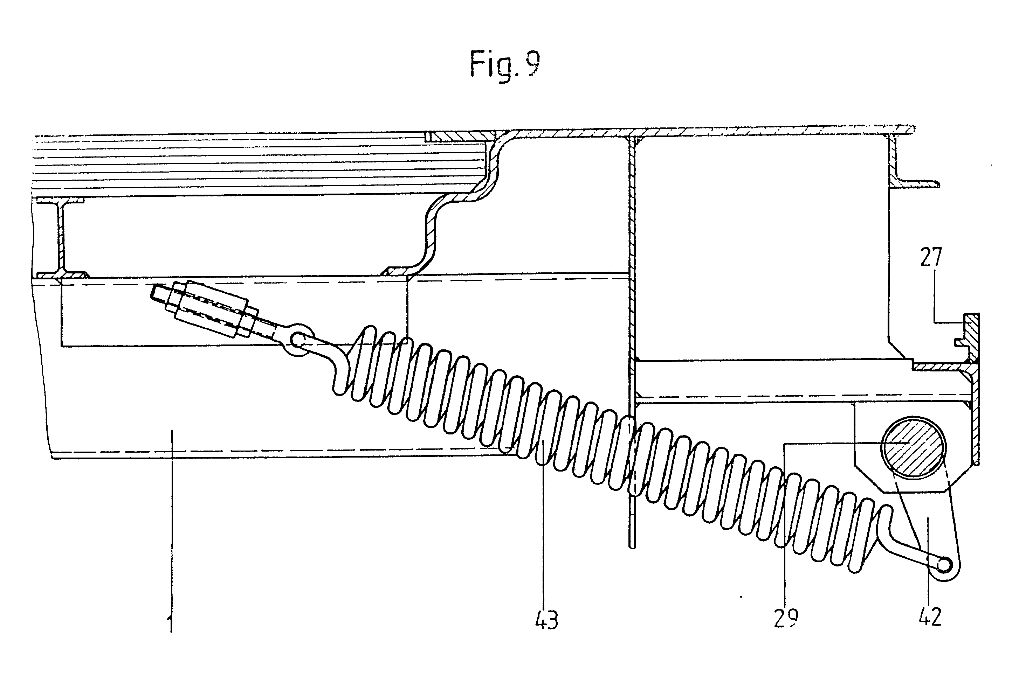

Fig. 9 einen Teilquerschnitt durch das Untergestell des Eisenbahngüterwagens nach Fig. 1 mit Entlastungsfeder,

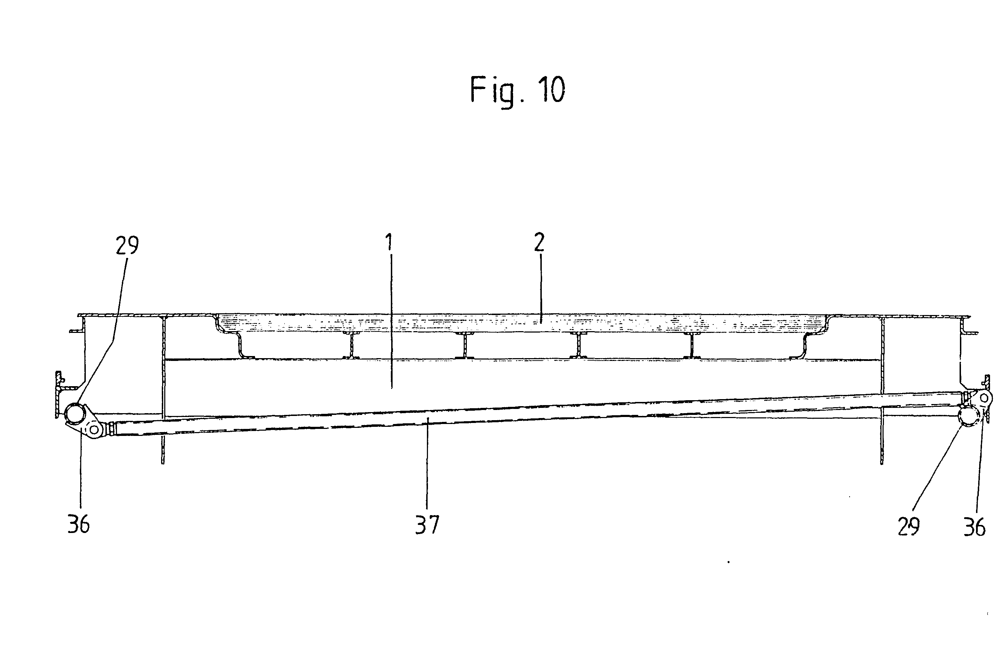

Fig. 10 einen Querschnitt durch das Untergestell des Eisenbahngüterwagens nach Fig. 1 mit Querverbindung.

Der Laderaum des in der Zeichnung dargestellten Eisenbahngüterwagens wird im wesentlichen durch den die Oberseite des Untergestells 1 bildenden Ladeboden 2, die kopfendigen Stirnwände 3 und die beiden Haube 4 begrenzt. In Wagenlängsmitte ist auf dem Untergestell 1 ein den Laderaum überspannendes Mittelportal 5 angeordnet, das lediglich unten an dem Untergestell 1 befestigt ist und keine Verstrebungen in Wagenlängsrichtung zum Untergestell 1 oder zu den Stirnwänden 3 aufweist.

In Schließstellung der Hauben 4 liegen diese mit ihren Stirnenden über metallische Labyrinthdichtungen 6 mit Längsspiel in metallischen Labyrinthdichtungen 7 der Stirnwand 3 bzw. metallischen Labyrinthdichtungen 8 des Mittelportals 5 an.

Die Haube 4 ist in ihrem Querschnitt annähernd dem Lichtraumprofil für Eisenbahngüterwagen ausgebildet. In ihrem oberen Scheitel ist jede Haube 4 längsgeteilt, wobei die Hälften jeder Haube 4 durch in Wagenlängsachse angeordnete Scharnier- oder Bolzengelenke 9 gelenkig miteinander verbunden sind. Die Trennstelle jeder Haube 4 ist vollständig mit einer elastischen Abdeckung 10 abgedeckt, die auf jeder Hälfte der Haube 4 dicht befestigt ist.

In Höhe des Übergangs des vertikalen Bereiches der Haube 4 in deren abgewinkelten Bereich ist auf jeder Seite in der Haube 4 ein von Stirnende zu Stirnende durchlaufender Längsträger 11 angeordnet, von dem senkrecht nach oben und nach unten rippenförmige Spriegel 12 ausgehen, die oben und unten bei jeder Hälfte der Haube 4 fest an horizontal angeordneten Abschlußprofilen 13 bzw. 14 fest angebunden sind. Stirnseitig wird jede Raube durch die als Profil ausgebildeten metallischen Labyrinthdichtungen 6 begrenzt. Die Bespannung der Haube 4 erfolgt mittels Blech oder sonstigen geeigneten Mitteln.

An dem stirnseitigen Ende jeder Haube 4 ist an jedem Längsträger 11 eine hakenförmige Klammer 15 angeordnet, die in Schließstellung der Haube 4 und in der Verschiebestellung der Haube 4 vor deren Schließstellung gegen elastische Anschläge 16 der Stirnwand anliegt. In Schließstellung der Haube 4 umfaßt die Klammer 15 mit Spiel einen an der Stirnwand 3 in Höhe des Anschlags 16 angeordneten Haken 17. An dem Abschlußprofil 14 der Haube 4 sind mehrere nach unten ragende Stützfüße 18 angeordnet, die in Schließstellung der Haube 4 auf je einer kurzen Stützschiene 19 aufsitzen, die am Untergestell 1 befestigt sind. Stützfuß 18 und Stützschiene 19 sind in Wagenlängsrichtung angeordnet und mit korrespondierenden, in Wagenlängsrichtung verlaufenden seitlichen Schrägflächen versehen, wobei die Schrägflächen der Stützschiene 19 in Schließstellung der Hauben 4 von außen mit Spiel vor den Schrägflächen der Stützfüße 18 positioniert sind.

An dem Abschlußprofil 14 der Haube 4 ist weiter nahe deren stirnwandseitigem Längsende je ein Anschlagstück 20 angeordnet, das in Schließstellung der Haube 4 mit Spiel vor einem Anschlagnocken 21 steht, der am Untergestell 1 fest angeordnet ist. Nahe dem portalseitigen Längsende der Haube 4 ist an dem Abschlußprofil 14 nach unten ragend mindestens je ein Krampen 22 fest angeordnet, der in Schließstellung der Haube 4 in Richtung zugehöriger Stirnwand mit Spiel vor und unter je einem Abhebesicherungsnocken 23 steht, der fest am Untergestell 1 angeordnet ist.

Bei einem durch einen Auflaufstoß des Eisenbahngüterwagens bewirkten Druck des Ladegutes gegen die Innenseite einer Stirnwand 3 wird diese elastisch nach außen verbogen. Jeder Haken 17 der Stirnwand legt sich dabei gegen die Klammer 15 der Haube 4 an und zieht die Haube 4 in Richtung Stirnwand 3. Bei diesem Vorgang legen sich die Anschlagstücke 20 der Haube 4 gegen die Anschlagnocken 21 des Untergestells an, wodurch eine kraftschlüssige Verbindung der Haube 4 mit dem Untergestell in Längsrichtung erfolgt. Die elastische Ausbiegung der Stirnwand wird dadurch behindert. Die Stirnwand 3 biegt sich nach dem Auflaufstoß wieder elastisch zurück und drückt die Haube 4 über die Anschläge 16 und den Haken 15 wieder in ihre Ausgangsstellung zurück. Bei dem Auflaufstoß wird die Haube 4 an ihrem portalseitigen Stirnende angehoben. Die Krampen 22 der Haube 4 legen sich dabei gegen und unter die Abhebesicherungsnocken 23 des Untergestells 1 und verhindern so das Abheben der Haube 4.

Zum Verschieben der Haube sind an jedem Abschlußprofil 14 nahe dessen Längsenden fest Laufrollenfüße 25 angeordnet, an deren Längsenden je eine Laufrolle 26 drehbar angeordnet ist. Die Laufrollen 26 stehen in Verschiebestellung der Hauben 4 auf einer Laufschiene 27, die außen fest am Untergestell 1 angeordnet ist. Die Laufschiene 27 ist dabei gerade und unterbrochen von Stirnwand 3 zu Stirnwand 3 durchlaufend ausgebildet. An jedem Laufrollenfuß ist weiter eine kurze, den Laufrollenfuß überragende Hilfsschiene 28 in Wagenlängsrichtung fest angeordnet. Jede Haube 4 wird zum Verschwenken aus ihrer Schließstellung, in der sie über die Stützfüße 18 in den Stützschienen 19 des Untergestells 1 aufsitzt, angehoben, gespreizt und um das Bolzengelenk 9 scherenförmig nach außen verschwenkt, wobei sich die Laufrollen 26 auf die Laufschienen 27 aufsetzen. Dieses Anheben und Verschwenken der Haube 4 erfolgt über längs im Untergestell drehbar gelagerte Betätigungswellen 29. Zum Verdrehen der Betätigungswelle 29 jeder Haube ist an der zugehörigen Stirnwand 3 mindestens ein Handrad 30 angeordnet, das über ein Getriebe 31 eine vertikale Gewindespindel 32 verdreht. Auf der Gewindespindel 32 ist eine Spindelmutter 33 gelagert, an der gelenkig Lenkerstangen 34 angeordnet sind, die mit ihrem anderen Ende gelenkig an einem Hebel 35 befestigt sind, der fest an der Betätigungswelle 29 angeordnet ist.

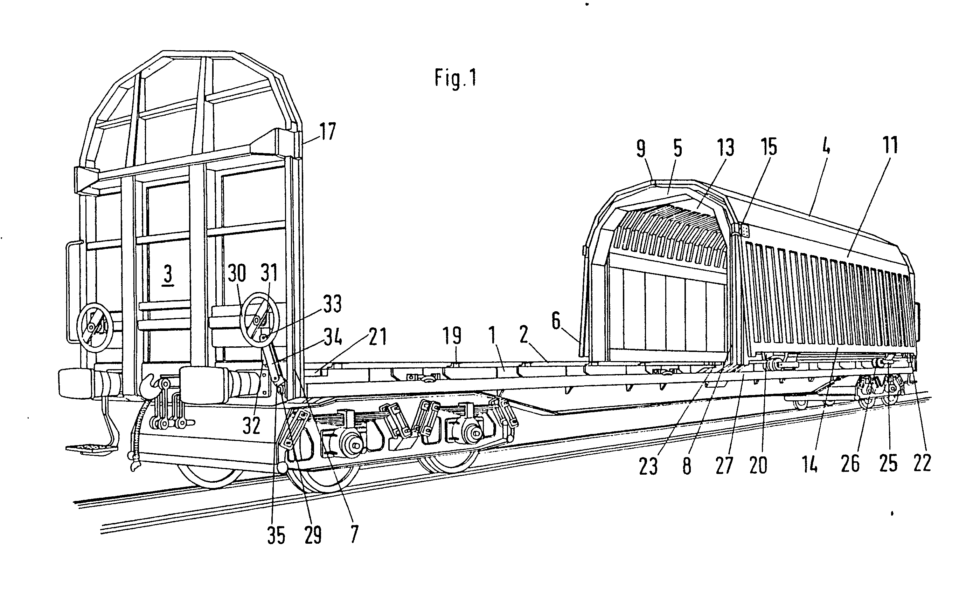

Das Verdrehen der Betätigungswelle 29 kann auch nach einem anderen, nicht dargestellten Ausführungsbeispiel der Erfindung mittels eines Hydraulikaggregats erfolgen. Es ist ebenfalls denkbar, daß die Betätigungswellen beider Hauben über ein von einer Stirnwand bedienbares Hydraulikaggregat verbunden sind und somit beide Hauben wahlweise von einer Stirnwand aus angehoben und ausgeschwenkt werden können. Wie in Fig. 1 der Zeichnung dargestellt, ist es ebenfalls möglich, an einer Stirnwand 3 nahe jeder Längsseite des Wagens je ein Handrad 30 anzuordnen und die Handräder 30 mittels eines geeigneten Verbindungselementes drehfest miteinander zu verbinden.

Die Betätigungswellen 29 einer Haube 4 jeder Wagenlängsseite sind über fest an den Betätigungswellen angeordnete Hebel 36 und gelenkig an diesen angeordnete Lenkerstangen 37 so miteinander verbunden, daß ein gegenläufiges Verdrehen der Betätigungswellen 29 beim Verdrehen des Handrades 30 bewirkt wird. Für jeden Laufrollenfuß 25 ist an der Betätigungswelle 29 fest ein Stützarm 38 angeordnet, der an seinem freien Ende eine in Wagenlängsrichtung drehbare Stützrolle 39 trägt. Die Stützrolle 39 liegt mit ihrer hohlkehlenförmig ausgebildeten Lauffläche in Schließstellung der Haube 4 und in Verschiebestellung der Haube 4 vor deren Schließstellung von unten gegen die Hilfsschiene 28 an. Beim Verdrehen der Betätigungswelle 29 in Öffnungsrichtung der Haube 4 hebt der Stützarm 36 über die Stützrolle 39 und die Hilfsschiene 28 den Laufrollenfuß 25 und mit diesem die Haube 4 an und verschwenkt diese in Verschiebestellung. Um ein Abgleiten der Hilfsschiene 28 von der Stützrolle 39 beim Verschwenken der Betätigungswelle 29 zu verhindern, sind an der Betätigungswelle 29 Sicherungsgabeln 40 neben dem Stützarm 38 angeordnet, die mit ihrem freien, gabelförmigen Ende die Hilfsschiene 28 umgreifen und ein Abgleiten der Hilfsschiene 28 von der Stützrolle 39 verhindern.

Geeignete und bekannte Mittel, wie beispielsweise Spurkränze an den Laufrollen 26 oder um vertikale Achsen drehbare Führungsrollen verhindern ein Abgleiten der Laufrollen 26 von der Laufschiene 27 beim Verschieben der Haube 4. Weiter sind als Abhebesicherung an den Laufrollenfüßen 25 Krampen angeordnet, die in geeignete Ausnehmungen der Laufschiene 27 eingreifen und die Haube 4 beim Verschieben gegen Abheben sichern.

Um ein Anlegen der zu verschiebenden Haube während des Öffnungsvorganges oben an das Mittelportal 5 oder die sich in Schließstellung befindliche Haube 4 zu verhindern, sind außen an jede Haube 4 und an dem Mittelportal 5 um vertikale Achsen drehbare Führungsrollen 41 angeordnet.

An mindestens einer Betätigungswelle jeder Haube ist fest ein weiterer Hebel 42 angeordnet, an dessen freiem Ende eine Entlastungsfeder 43 angeordnet ist, die mit ihrem anderen Ende am Untergestell 1 befestigt ist. Beim Verschwenken der Haube 4 aus ihrer Verschiebestellung in ihre Schließstellung wird die Entlastungsfeder durch das Eigengewicht der Haube 4 gespannt und unterstützt dadurch den Öffnungsvorgang für die Haube 4.

**Patentansprüche**

1. Eisenbahngüterwagen mit Stirnwänden (3) und fest angeordnetem Mittelportal (5), einem im wesentlichen ebenen Ladeboden und den Laderaum abdeckenden, in Schließstellung in einer Ebene liegenden und über auf Laufschienen (27) laufenden Laufrollen (26) übereinander verschiebbaren Hauben (4), die in ihrem oberen Scheitel geteilt mit Gelenken (9) und einer elastischen Abdeckung (10) versehen und zum Verschieben aus ihrer Schließstellung in eine Verschiebestellung mittels einer Betätigungseinrichtung (29 - 40) anhebbar und ausschwenkbar sind, dadurch gekennzeichnet, daß das fest mit dem Untergestell (1) verbundene Mittelportal (5) unverstrebt angeordnet ist, daß jede den Laderaum zwischen einer Stirnwand (3) und dem Mittelportal (5) abdeckende Haube (4) in Schließstellung an ihrem stirnwandseitigen Längsende form- und kraftschlüssig mit der Stirnwand (3) verklammert ist, auf ihren Längsseiten unten nahe dem stirnwandseitigen Längsende mit Anschlagstücken (20) in Richtung Stirnwand (3) mit Spiel vor Anschlagnocken (21) am Rahmen des Untergestells (1) des Eisenbahngüterwagens steht, nahe ihres portalseitigen Längsendes auf ihren Längsseiten unten mit Krampen (22) in Richtung Stirnwand (3) mit Spiel vor und unter Abhebesicherungsnocken (23) des Untergestells (1) steht, daß die Haube (4) über unten an ihren Längsseiten fest angeordneten Stützfüßen (18) in Stützschienen (19) des Untergestells (1) steht, und daß die Haube (4) mittels der Betätigungseinrichtung (29 - 40) aus der Schließstellung mit ihren Laufrollen (26) auf die Laufschienen (27) in die Verschiebestellung anhebbar, ausschwenkbar und absetzbar ist.

2. Eisenbahngüterwagen nach Anspruch 1, dadurch gekennzeichnet, daß die Haube (4) im Bereich der Verklammerung mit der Stirnwand (3) einen durchgehenden Längsträger (11) aufweist, an dem rippenförmig bis zu Abschlußprofilen (13 u. 14) der Längsseiten jeder Hälfte der Haube (4) verlaufende Spriegel (12) fest angeordnet sind.

3. Eisenbahngüterwagen nach den Ansprüchen 1 und 2, dadurch gekennzeichnet, daß jeder Stützfuß (18) und jede Stützschiene (19) mit korrespondierenden, in Wagenlängsrichtung verlaufenden Schrägflächen versehen sind, wobei die Schrägflächen der Stützschiene (19) in Schließstellung der Hauben (4) von außen mit Spiel vor den Schrägflächen der Stützfüße (18) positioniert sind.

4. Eisenbahngüterwagen nach den Ansprüchen 1 bis 3, dadurch gekennzeichnet, daß jede Haube (4) in Verschiebestellung vor ihrer Schließstellung und in Schließstellung gegen elastische Anschläge (16) der Stirnwand (3) anliegt.

5. Eisenbahngüterwagen nach den Ansprüchen 1 bis 4, dadurch gekennzeichnet, daß jede Haube (4) auf ihrer Außenseite im Bereich des Längsträgers (11) und das Mittelportal (5) auf seiner Außenseite um eine vertikale Achse drehbare Führungsrollen (41) zum seitlichen Führen der verschobenen Haube (4) aufweist.

6. Eisenbahngüterwagen nach den Ansprüchen 1 bis 5, dadurch gekennzeichnet, daß auf jeder Längsseite des Untergestells (1) eine einzige gerade und ununterbrochene über die gesamte Wagenlänge durchlaufende Laufschiene (27) angeordnet ist und daß auf jeder Längsseite jeder Haube (4) wie bekannt unten mindestens zwei Laufrollen (26) an festen Laufrollenfüßen (25) angeordnet sind, wobei an jedem Laufrollenfuß (25) eine kurze, den Laufrollenfuß (25) seitlich überragende Hilfsschiene (28) in Wagenlängsrichtung fest angeordnet ist.

7. Eisenbahngüterwagen nach den Ansprüchen 1 bis 6, dadurch gekennzeichnet, daß die Betätigungseinrichtung (29 - 40) für jede Haube (4) auf jeder Wagenlängsseite je eine Betätigungswelle (29) beinhaltet, die in Wagenlängsrichtung im Untergestell (1) drehbar gelagert ist, daß die Betätigungswelle (29) für jeden Laufrollenfuß (25) einen fest angeordneten Stützarm (38) trägt, an dessen freiem Ende eine in Wagenlängsrichtung drehbare Stützrolle (39) angeordnet ist, die sowohl in Schließstellung der Haube (4) als auch in Verschiebestellung der Haube (4) vor deren Schließstellung von unten gegen die Hilfsschiene (28) anliegt wobei die Haube (4) mittels der Betätigungswelle (29) über den Stützarm (38), die Stützrolle (39) und die Hilfsschiene (28) aus der Schließstellung in die Verschiebestellung verschwenkbar ist.

8. Eisenbahngüterwagen nach den Ansprüchen 1 bis 7, dadurch gekennzeichnet, daß an der Betätigungswelle (29) nahe jedem Stützarm (38) fest mindestens eine Sicherungsgabel (40) angeordnet ist, die in Schließstellung der Haube (4) und während deren Verschwenkens die Hilfsschiene (28) umgreift.

9. Eisenbahngüterwagen nach den Ansprüchen 1 bis 8, dadurch gekennzeichnet, daß die Betätigungswellen (29) jeder Haube (4) durch ein ein gegenläufiges Verdrehen der Betätigungswellen (29) bewirkendes Gestänge (Hebel 36 und Lenkerstange 37) verbunden sind.

10. Eisenbahngüterwagen nach den Ansprüchen 1 bis 9, dadurch gekennzeichnet, daß in die Betätigungseinrichtung (29 - 40) jeder Haube (4) eine Entlastungsfeder (43) zwischengeschaltet ist, die durch das Eigengewicht der Haube (4) beim Verschwenken in deren Schließstellung spannbar ist.

11. Eisenbahngüterwagen nach den Ansprüchen 1 bis 10, dadurch gekennzeichnet, daß die Betätigungseinrichtung (29 - 40) für jede Haube (4) mindestens ein an der zugehörigen Stirnwand (3) angeordnetes Handrad (30), ein mit diesem verbundenes Getriebe (31), eine Gewindespindel (32) mit Spindelmutter (33) und zwischen Betätigungswelle (29) und Spindelmutter (33) angeordnete Hebel (35) und Lenkerstangen (34) aufweist.

**Claims**

1. Railway goods wagon with end walls (3) and fixed central portal (5), an essentially flat load floor and covers (4), which cover the load space, lie in one plane in the closed position and can be moved over one another by means of running rollers (26) running on running rails (27) and which, at their upper apexes, are divided and are provided with hinges (9) and elastic coverings (10) and can be lifted and swung out by means of an operating device (29 - 40) for moving them from their closed positions to moving positions, characterized in that the central portal (5) joined permanently to the underframe (1) is positioned without bracing, in that when it is in its closed position each cover (4) covering the load space between one end wall (3) and the central portal (5) is clamped positively and non-positively at its end-wall end to the end wall (3), rests with stop plates (20) on the underside of its sides close to the end-wall ends directed towards the end wall (3) with clearances opposite stop lugs (21) on the frame of the underframe (1) of the railway goods wagon, rests with catches (22) on the underside of its sides close to its portal-end end directed towards the end wall (3) with clearances opposite and below lift-preventing lugs (23) on the underframe (1), in that the cover (4) rests on the support rails (19) of the underframe (1) by means of fixed support feet (18) on the underside of its sides, and in that the cover (4) can be lifted by means of the operating device (29 - 40) from the closed position, swung out and lowered with its running rollers (26) on the running rails (27) in the moving position.

2. Railway goods wagon according to claim 1, characterized in that in the region of the clamping system with the end wall (3) the cover (4) has a continuous longitudinal girder (11) on which are fixed struts (12) which run like ribs to the terminal profiled members (13 and 14) of the sides of each half of the cover (4).

3. Railway goods wagon according to claims 1 and 2, characterized in that each support foot (18) and each support rail (19) have corresponding, inclined, surfaces running in the lengthwise direction of the wagon, the inclined surfaces of the support rails (19) being positioned outside and with a clearance opposite the inclined surfaces of the support feet (18) when the cover (4) is in the closed position.

4. Railway goods wagon according to claims 1 to 3, characterized in that, when it is in the moving position opposite the closed position and when it is in the closed position, each cover (4) is seated against flexible stops (16) on the end wall (3).

5. Railway goods wagon according to claims 1 to 4, characterized in that guide rollers (41) which rotate about vertical axes are positioned on the outer side of each cover (4) in the region of the longitudinal girder (11), and also on the outer side of the central portal (5) for lateral guidance of the cover (4) being moved.

6. Railway goods wagon according to claims 1 to 5, characterized in that a single straight and uninterrupted running rail (27) passing the entire length of the wagon is positioned on each side of the underframe (1), and in that at least two running rollers (26) on fixed running-roller feet (25) are positioned under each side of each cover (4) in known manner, a short auxiliary rail (28) extending sideways beyond the running-roller foot (25) in the lengthwise direction of the wagon being fixed on each running-roller foot (25).

7. Railway goods wagon according to claims 1 to 6, characterized in that the operating device (29 - 40) for each cover (4) includes on each side of the wagon an operating shaft (29) which is mounted in the lengthwise direction of the wagon in the underframe (1) so that it can rotate, in that the operating shaft (29) carries for each running-roller foot (25) a fixed support arm (38) on the free end of which is positioned a support roller (39) which can rotate in the lengthwise direction of the wagon and which is seated from below against the auxiliary rail (28) both when the cover (4) is in the closed position and when the cover (4) is in the moving position opposite its closed position, it being possible to swing the cover (4) from the closed position into the moving position by means of the operating shaft (29) acting through the support arm (38), the support roller (39) and the auxiliary rail (28).

8. Railway goods wagon according to claims 1 to 7, characterized in that at least one safety bracket (40) is fixed on the operating shaft (29) near each support arm (38) and encompasses the auxiliary rail (28) when the cover (4) is in the closed position and during the swinging process.

9. Railway goods wagon according to claims 1 to 8, characterized in that the operating shafts (29) of each cover (4) are joined by a linkage (levers 36 and link rod 37) which produces a contrary rotation of the operating shafts (29).

10. Railway goods wagon according to claims 1 to 9, characterized in that a relief spring (43) is interposed in the operating device (29 - 40) of each cover (4) and is tensioned by the dead weight of the cover (4) when it is swung into its closed position.

11. Railway goods wagon according to claims 1 to 10, characterized in that the operating device (29 - 40) for each cover (4) has at least one hand wheel (30) positioned on the associated end wall (3), a gear unit (31) connected to it, a threaded spindle (32) with spindle nut (33), and levers (35) and link rods (34) positioned between the operating shaft (29) and spindle nut (33).

**Revendications**

1. Wagon de marchandises comportant des parois frontales (3) et un portique central fixe (5), un plancher de chargement sensiblement plan et des capots (4) couvrant l'espace de chargement, situés, en position fermée, dans un plan et déplaçables l'un par-dessus l'autre par des roulettes (26) roulant sur des rails (27), ces capots (4) étant divisés à leur sommet et pourvus là d'articulations (9) et d'une couverture élastique (10) et pouvant, pour leur déplacement de leur position fermée à une position de déplacement, être levés et basculés vers l'extérieur au moyen d'un dispositif de manoeuvre (29 à 40), caractérisé par le fait que le portique central (5), uni rigidement au châssis (1), n'est pas étresillonné, que chaque capot (4), couvrant l'espace de chargement entre une paroi frontale (3) et le portique central (5), est, en position fermée, à son extrémité longitudinale côté paroi frontale, cramponné par emboîtement et serrage à la paroi frontale (3), présente sur ses côtés longitudinaux, en bas, près de son extrémité longitudinale côté paroi frontale, des pièces de butée (20) qui se trouvent, en direction de la paroi frontale (3), avec jeu devant des ergots de butée (21) prévus sur le châssis (1) du wagon, et présente près de son extrémité longitudinale côté portique, sur ses côtés longitudinaux, en bas, des crampons (22) qui se trouvent en direction de la paroi frontale (3), avec jeu devant et sous des ergots anti-soulèvement (23) du châssis (1), que le capot (4) repose, par des pattes d'appui (18) prévues en bas, fixes, sur ses côtés longitudinaux, dans des bandes d'appui (19) du châssis (1), et que le capot (4) peut, au moyen du dispositif de manoeuvre (29 à 40), être levé, basculé vers l'extérieur et reposé de sa position fermée à sa position de déplacement, ses roulettes (26) étant sur les rails (27).

2. Wagon de marchandises selon la revendication 1, caractérisé par le fait que le capot (4) présente, dans la zone de cramponnage à la paroi frontale (3), un longeron (11) allant d'un bout à l'autre sur lequel sont prévus, fixes, des arceaux (12) s'étendant, sous forme de nervures, jusqu'à des profilés d'extrémité (13 et 14) des côtés longitudinaux de chaque moitié du capot (4).

3. Wagon de marchandises selon les revendications 1 et 2, caractérisé par le fait que chaque patte d'appui (18) et chaque bande d'appui (19) ont des faces obliques correspondantes s'étendant en direction longitudinale du wagon, les faces obliques de la bande d'appui (19) étant, lorsque les capots (4) sont en position fermée, à l'extérieur devant les faces obliques des pattes d'appui (18).

4. Wagon de marchandises selon les revendications 1 à 3, caractérisé par le fait que chaque capot (4), en position de déplacement avant sa position fermée et en position fermée, s'appuie contre des butées élastiques (16) de la paroi frontale (3).

5. Wagon de marchandises selon les revendications 1 à 4, caractérisé par le fait que chaque capot (4), sur son côté extérieur, dans la zone du longeron (11), et le portique central (5), sur son côté extérieur, présentent des galets de guidage (41) pouvant tourner autour d'un axe vertical destinés au guidage latéral du capot (4) déplacé.

6. Wagon de marchandises selon les revendications 1 à 5, caractérisé par le fait que, sur chaque côté longitudinal du châssis (1), est prévu un rail (27) unique rectiligne s'étendant sans interruption sur toute la longueur du wagon et que, sur chaque côté longitudinal de chaque capot (4), sont, de manière connue, prévues en bas sur des pattes fixes (25) au moins deux roulettes (26), un court rail auxiliaire (28) qui dépasse latéralement de la patte (25) étant prévu, fixe, sur chaque patte à roulette (25) en direction longitudinale du wagon.

7. Wagon de marchandises selon les revendications 1 à 6, caractérisé par le fait que le dispositif de manoeuvre (29 à 40) comporte pour chaque capot (4) sur chaque côté longitudinal du wagon un arbre de manoeuvre (29) monté, tournant, en direction longitudinale du wagon, dans le châssis (1), que cet arbre de manoeuvre (29) porte, pour chaque patte à roulette (25), un bras fixe d'appui (38) à l'extrémité libre duquel est placé un galet d'appui (39) qui peut tourner en direction longitudinale du wagon et, lorsque le capot (4) est en position fermée et lorsqu'il est en position de déplacement avant sa position fermée, s'appuie d'en bas contre le rail auxiliaire (28), le capot (4) pouvant être basculé de sa position fermée à sa position de déplacement au moyen de l'arbre de manoeuvre (29) par l'intermédiaire du bras d'appui (38), du galet d'appui (39) et du rail auxiliaire (28).

8. Wagon de marchandises selon les revendications 1 à 7, caractérisé par le fait que sur l'arbre de manoeuvre (29) est prévue, fixe, près de chaque bras d'appui (38), au moins une fourche d'arrêt (40) qui, lorsque le capot (4) est en position fermée et pendant le basculement de celui-ci, embrasse le rail auxiliaire (28).

9. Wagon de marchandises selon les revendications 1 à 8, caractérisé par le fait que les arbres de manoeuvre (29) de chaque capot (4) sont reliés par une timonerie (leviers 36 et barre 37) qui produit une rotation en sens contraires de ces arbres (29).

10. Wagon de marchandises selon les revendications 1 à 9, caractérisé par le fait que dans le dispositif de manoeuvre (29 à 40) de chaque capot (4) est intercalé un ressort de décharge (43) qui peut être tendu par le poids propre du capot (4) lors du basculement de ce dernier en position fermée.

11. Wagon de marchandises selon les revendications 1 à 10, caractérisé par le fait que le dispositif de manoeuvre (29 à 40) présente pour chaque capot (4) au moins un volant (30) prévu sur la paroi frontale (3) correspondante, un engrenage (31) lié à ce volant, une vis (32) à écrou (33) et des leviers (35) et des barres (34) placés entre l'arbre de manoeuvre (29) et l'écrou (33).

Fig.1

EP 0 121 086 B1

Fig. 2

# Fig. 3

# Fig. 4

EP 0 121 086 B1

# Fig. 5

Fig.6

# Fig. 7

# Fig.8

Fig. 9

EP 0 121 086 B1

Fig. 10

EP 0 121 086 B1